# FASCICULE DE BREVET EUROPEEN

(11) **EP 2 957 201 B1**
(45) Date de publication et mention de la délivrance du brevet: **14.08.2019**
(21) Numéro de dépôt: 14178645.9
(22) Date de dépôt: 25.07.2014
(51) Int. Cl.: A47J 43/25, A47J 43/046, A47J 43/06, A47J 43/08

(54) **Dispositif de préparation d'aliments comprenant au moins un outil de travail**
Lebensmittelzubereitungsvorrichtung, die mindestens ein Arbeitsinstrument umfasst
Food preparation device including at least one working tool

(30) Priorité: 19.06.2014 FR 1455671
(43) Date de publication de la demande: 23.12.2015
(73) Titulaire: SEB S.A., 69130 Ecully (FR)
(72) Inventeur: Bourgeois-Jacquet, Jean-Marie, 21800 Sennecey-les-Dijon (FR); Masson, Antony, 69009 Lyon (FR)
(74) Mandataire: Bourrières, Patrice

(56) Documents cités:
- EP-A2- 2 159 015
- US-A- 366 459
- US-A- 4 386 740

## Description

La présente invention concerne de manière générale un dispositif de préparation d'aliments, du type des appareils ou des accessoires de préparation culinaire comprenant au moins un outil de travail pour travailler des aliments, en les coupant ou en les râpant par exemple.

Il est connu dans l'art antérieur de tels appareils de préparation culinaire, comme celui divulgué dans le document WO2010106284 par exemple. En contrepartie, ce système présente notamment l'inconvénient d'être complexe à fabriquer, en raison des nombreuses contraintes à prendre en compte. Tout d'abord, le boîtier de cet appareil de préparation culinaire forme un col de cygne, c'est-à-dire qu'un évidement pour recueillir les aliments travaillés est nécessaire entre la base du boîtier et la couronne supérieure où sont installés les outils de travail. Il en résulte un porte à faux important qui génère des contraintes mécaniques élevées lorsque l'utilisateur pousse les aliments vers l'outil de coupe, à travers la goulotte d'alimentation. En conséquence, la structure interne du boîtier doit être prévue pour résister à ces contraintes et le coût de fabrication ainsi que le poids de l'appareil de préparation culinaire seront impactés. Enfin, on peut mentionner que l'appareil décrit par ce document est compliqué au niveau de la goulotte d'alimentation, qui doit être pivotante pour pouvoir occuper une première position dans laquelle son axe d'alimentation est colinéaire avec l'axe de rotation de l'outil de travail, ou une deuxième position dans laquelle son axe d'alimentation est excentré radialement par rapport à l'axe de rotation de l'outil de travail.

Un appareil selon les caractéristiques du préambule de la revendication 1 est connu du document US4386740.

Un but de la présente invention est de répondre aux inconvénients de l'art antérieur mentionnés ci-dessus et en particulier, tout d'abord, de proposer un dispositif de préparation d'aliments dont l'architecture interne est robuste tout en restant légère.

Ce but est atteint avec un dispositif de préparation d'aliments comprenant :
- un boîtier présentant un dispositif d'entraînement,
- au moins un outil de travail entraîné en rotation autour d'un axe de rotation,
- le boîtier présentant une portion d'appui agencée pour définir un plan support sur lequel le dispositif de préparation d'aliments peut reposer,
- l'axe de rotation formant un angle α avec une droite d'intersection du plan support avec un autre plan perpendiculaire au plan support et comprenant l'axe de rotation, l'angle α étant compris dans une gamme de valeurs allant de 0° à 20°,
- le boîtier comprenant une interface de fixation d'une pièce d'alimentation,
- la pièce d'alimentation étant agencée pour être montée sur l'interface de manière amovible,
   du fait
- que l'outil de travail comporte une couronne périphérique agencée pour être entraînée par le dispositif d'entraînement autour de l'axe de rotation,
- et que l'interface est agencée autour d'un orifice ménagé dans une paroi du boîtier pour faire passer au travers de la paroi les aliments introduits dans la pièce d'alimentation et/ou transformés par l'outil de travail.
Grâce à l'entraînement périphérique, l'axe de rotation est dégagé et les aliments travaillés passent au travers de l'orifice pour être travaillés et déversés dans un récipient, ou directement dans une assiette pour être consommés. L'appareil de préparation culinaire présente donc un axe de rotation de l'outil de travail orienté entre 0° et 20° par rapport au plan support. En conséquence, il n'y a pas besoin de prévoir de col de cygne au niveau du boîtier car l'axe de rotation est essentiellement horizontal et les aliments travaillés peuvent être déversés vers un récipient sans avoir à ménager d'évidement dans le boîtier. Il n'y a pas de partie en porte à faux, ce qui réduit les contraintes pouvant être exercées par l'utilisateur, et la structure interne du boîtier peut être simplifiée.

Avantageusement alors, l'outil de travail est agencé pour être pris en sandwich entre l'interface et la pièce d'alimentation, lorsque la pièce d'alimentation est montée sur l'interface. Une telle disposition permet d'obtenir un guidage et un maintien satisfaisants de l'outil de travail, notamment pour les outils de travail tronconiques ou cylindriques, sans nécessiter un verrouillage de l'outil de travail sur un entraîneur.

Avantageusement encore, le dispositif de préparation d'aliments comprend une bavette de déversement agencée en aval de l'orifice. Cette mise en oeuvre facilite le déversement directement au milieu d'un récipient de réception, ce qui améliore l'ergonomie d'utilisation.

Selon un mode de réalisation, la pièce d'alimentation comprend un premier conduit de guidage axial agencé pour guider des aliments vers l'outil de travail selon une première direction le long de l'axe de rotation.

Alors, selon une forme de réalisation, le ou l'un des outils de travail est conique et comprend au moins une lame de coupe agencée dans une partie concave pour couper en spirale des aliments lorsqu'ils sont introduits par le premier conduit de guidage dans la partie concave. Ce type d'outil de travail fonctionne sur le même principe qu'un taille crayon et offre la possibilité de travailler les aliments pour obtenir des bandes telles que des tagliatelles ou des spaghettis de légumes. Si désiré la lame de coupe peut être associée à une ou plusieurs lames complémentaires s'élevant au dessus de la lame de coupe, pour fendre les aliments découpés, afin d'obtenir des bandes de largeur plus réduite.

Avantageusement alors, ledit outil de travail conique présente une base formant la couronne périphérique.

En alternative, l'outil de travail peut notamment consister en un outil pour râper les aliments friables, comportant une pluralité de protubérances prévues pour fragmenter lesdits aliments. Un tel premier outil de travail n'est ainsi pas nécessairement conique.

Selon un mode de réalisation, la pièce d'alimentation comprend un deuxième conduit de guidage non-axial agencé pour guider des aliments vers l'outil de travail selon une deuxième direction différente de l'axe de rotation, et le ou l'un des outils de travail est tronconique ou cylindrique et comprend au moins une portion de coupe agencée sur une génératrice d'un tronc de cône ou d'un cylindre, pour travailler des aliments lorsqu'ils sont introduits par le deuxième conduit de guidage. Un tel outil de travail tronconique ou cylindrique peut par exemple être un outil de coupe en tranches ou en rondelles, ou un outil de râpage, notamment pour les aliments non friables. Le deuxième conduit de guidage non-axial s'étendant hors de l'axe de rotation permet de travailler les aliments latéralement par rapport à l'axe de rotation.

Avantageusement alors, le deuxième conduit de guidage est agencé pour guider les aliments à travailler selon une direction perpendiculaire à une génératrice dudit outil de travail tronconique ou cylindrique située en regard du deuxième conduit de guidage. Cette disposition permet de mieux plaquer les aliments sur l'outil de travail tronconique ou cylindrique, ce qui permet un meilleur débit de transformation des aliments, voire une meilleure qualité de coupe.

Avantageusement encore, ledit outil de travail est tronconique et présente un angle de cône dont la valeur est le double de la valeur de l'angle α. Cette mise en oeuvre permet d'obtenir qu'une des génératrices de l'outil de travail tronconique soit parallèle au plan support.

Avantageusement alors, ledit outil de travail tronconique présente une première base et une deuxième base d'un diamètre supérieur à un diamètre de la première base, et la deuxième base comprend la couronne périphérique.

Avantageusement encore, la portion d'appui définit un empattement, et le dispositif de préparation d'aliments comprend un poussoir agencé pour permettre à un utilisateur de pousser les aliments à travailler dans le deuxième conduit de guidage vers l'outil de travail selon un axe de poussée, l'axe de poussée présentant un point d'intersection avec le plan support situé dans l'empattement. Comme la direction de poussée passe entre les appuis du dispositif de préparation d'aliments, il n'y a pas de couple de renversement lors de l'utilisation, et la stabilité est encore améliorée.

Selon un mode de réalisation, le boîtier loge un moteur électrique agencé pour entraîner en rotation l'outil de travail mis en place dans l'espace de travail, par l'intermédiaire du dispositif d'entraînement. Le dispositif de préparation d'aliments forme alors un appareil électrique de préparation culinaire.

Avantageusement alors, le boîtier comprend un bouton de commande agencé pour mettre le moteur électrique en fonctionnement, le bouton de commande étant du type à appui maintenu selon une direction d'appui, la direction d'appui présentant un point d'intersection avec le plan support situé dans l'empattement. Comme la direction d'appui passe entre les appuis du dispositif de préparation d'aliments, il n'y a pas de couple de renversement lors de l'utilisation, et la stabilité est encore améliorée.

En alternative, le dispositif d'entraînement peut notamment présenter un organe de transmission prévu pour être entraîné en rotation par un boîtier motorisé, l'organe de transmission entraînant l'entraîneur. Le dispositif de préparation d'aliments forme alors un accessoire pour ledit boîtier motorisé.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
- la figure 1 représente une vue en perspective d'un exemple de réalisation d'un dispositif de préparation d'aliments selon la présente invention, utilisant un outil de travail ;
- la figure 2 représente une autre vue en perspective du dispositif de préparation d'aliments de la figure 1, utilisant un autre outil de travail.

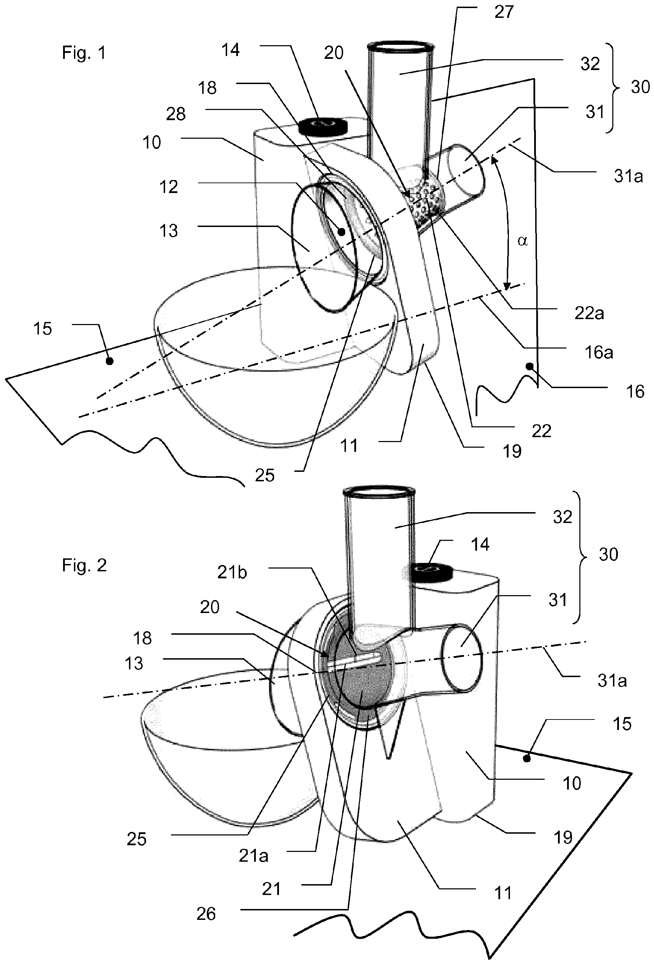

Les figures 1 et 2 représentent un dispositif de préparation d'aliments selon la présente invention, du type appareil électrique de préparation culinaire à outils de travail interchangeables pour travailler les aliments de différentes façons, et en particulier pour couper, trancher ou râper des aliments à travailler tels que des légumes ou du fromage.

Le dispositif de préparation d'aliments comprend un boîtier 10 présentant un dispositif d'entraînement (non représenté sur les figures). Le boîtier 10 comprend une portion d'appui 19 qui définit un plan support 15 pour pouvoir reposer de manière stable sur un plan de travail ou sur une table par exemple.

Le dispositif de préparation d'aliments comprend deux outils de travail 20 amovibles, chaque outil de travail 20 étant agencé pour être entraîné en rotation par le dispositif d'entraînement autour d'un axe de rotation 31a, lorsque mis en place dans un espace de travail.

Les outils de travail 20 comprennent un premier outil de travail 21 représenté sur la figure 2 et un deuxième outil de travail 22 représenté sur la figure 1.

Chaque outil de travail 20 comporte une couronne périphérique 25 agencée pour coopérer avec un entraîneur (non représenté sur les figures) appartenant au dispositif d'entraînement, lorsque ledit outil de travail 20 est mis en place dans l'espace de travail, afin d'entraîner en rotation ledit outil de travail 20.

Tel que représenté sur la figure 1, le deuxième outil de travail 22 est un outil servant à râper des aliments et présente une forme tronconique. De tels outils de travail 20 tronconiques peuvent être conçus pour râper, comme dans le cas du deuxième outil de travail 22 représenté, mais on peut envisager d'avoir également un outil de travail 20 de cette forme tronconique avec une lame de coupe pour trancher en rondelles les aliments à travailler. On rappelle qu'une forme tronconique est obtenue par l'intersection d'un cône avec deux plans, ici parallèles.

Le deuxième outil de travail 22 tronconique présente une première base 27 de petit diamètre et une deuxième base 28 de grand diamètre. Ainsi le diamètre de la deuxième base 28 est supérieur au diamètre de la première base 27.

Le dispositif de préparation d'aliments comprend une pièce d'alimentation 30 montée sur le boîtier 10. Un des outils de travail 20 est installé dans l'espace de travail défini au moins partiellement par la pièce d'alimentation 30 et le boîtier 10.

Le boîtier 10 loge un moteur électrique (non représenté sur les figures) agencé pour entraîner en rotation l'outil de travail 20 mis en place dans l'espace de travail par l'intermédiaire du dispositif d'entraînement.

La pièce d'alimentation 30 prend l'outil de travail 20 en sandwich au niveau de la deuxième base 28 de grand diamètre. La deuxième base 28 comprend la couronne périphérique 25 d'entraînement qui s'engage avec l'entraîneur (non représenté sur les figures) du dispositif de préparation d'aliments.

La pièce d'alimentation 30 est fixée sur une paroi 11 du boîtier 10 de manière amovible (par une interface à baïonnette et quart de tour par exemple), et prend l'outil de travail 20 en sandwich entre la paroi 11 et la pièce d'alimentation 30. La paroi 11 s'étend latéralement par rapport à une partie principale du boîtier 10 logeant le moteur électrique. La paroi 11 définit une partie de la portion d'appui 19. La portion d'appui 19 présente ainsi une configuration en T, la paroi 11 rejoignant la partie principale du boîtier à distance de ses extrémités.

Le boîtier 10 comprend ainsi une interface 18 de fixation de la pièce d'alimentation 30. La pièce d'alimentation 30 est agencée pour être montée sur l'interface 18 de manière amovible. Chaque outil de travail 20 est agencé pour être pris en sandwich entre l'interface 18 et la pièce d'alimentation 30, lorsque la pièce d'alimentation 30 est montée sur l'interface 18.

La pièce d'alimentation 30 comprend un premier conduit de guidage 31 et un deuxième conduit de guidage 32.

Le premier conduit de guidage 31 est axial. En d'autres termes, le premier conduit de guidage loge l'axe de rotation 31a. De manière préférée, son axe est confondu avec l'axe de rotation 31a. Dans l'exemple de réalisation illustré sur les figures, le premier conduit de guidage 31 présente une ouverture d'admission latérale pour l'introduction des aliments à transformer.

Le deuxième conduit de guidage 32 est non-axial. En d'autres termes, le deuxième conduit de guidage 32 s'étend hors de l'axe de rotation 31a. Dans l'exemple de réalisation illustré sur les figures, le deuxième conduit de guidage 32 présente une ouverture d'admission supérieure pour l'introduction des aliments à transformer.

Le deuxième outil de travail 22 tronconique comprend au moins une portion de coupe 22a agencée sur une génératrice d'un tronc de cône, pour travailler des aliments lorsqu'ils sont introduits par le deuxième conduit de guidage 32 dans l'espace de travail, lorsque le deuxième outil de travail 22 est mis en place dans l'espace de travail.

Dans la mise en oeuvre représentée figure 1, l'utilisateur fera passer les aliments à travailler par le deuxième conduit de guidage 32 pour qu'ils soient râpés par les multiples lames de coupe agencées sur la surface du tronc de cône du deuxième outil de travail 22.

Le boîtier 10 du dispositif de préparation d'aliments renferme le moteur électrique qui est relié à l'entraîneur, pour entraîner l'outil de travail 20 en rotation autour de l'axe de rotation 31a. L'entraînement est donc périphérique, par le biais de la couronne périphérique 25 de l'outil de travail 20. La paroi 11 du boîtier 10 comprend également un orifice 12 au niveau de l'interface de fixation de la pièce d'alimentation 30, et cette mise en oeuvre, en combinaison avec l'entraînement périphérique de l'outil de travail 20 permet de faire passer les aliments au travers de la paroi 11 pour pouvoir les déverser directement dans un récipient de réception, comme représenté sur la figure 1. Ainsi l'interface 18 est agencée autour de l'orifice 12 ménagé dans la paroi 11 pour faire passer au travers de la paroi 11 les aliments introduits dans la pièce d'alimentation 30 et/ou transformés par l'outil de travail 20.

Le dispositif de préparation d'aliments comprend de plus une bavette de déversement 13 pour améliorer le déversement et diriger les aliments travaillés vers le centre du récipient de réception. La bavette de déversement 13 est agencée en aval de l'orifice 12.

Afin de simplifier la structure interne du boîtier 10, l'axe de rotation 31a est essentiellement horizontal, pour éviter une structure en porte à faux, et/ou un boîtier 10 en col de cygne. En d'autres termes, si on représente un plan 16 contenant l'axe de rotation 31a et perpendiculaire au plan support 15, et une droite d'intersection 16a entre ces deux plans 15 et 16, l'angle α entre l'axe de rotation 31a et la droite d'intersection 16a est compris dans une gamme de valeurs allant de 0° à 20°. Cette mise en oeuvre permet de simplifier la structure interne du boîtier 10 (pas de porte à faux), et améliore également la stabilité lors de l'utilisation, car l'effort de poussée des aliments par le deuxième conduit de guidage 32 est essentiellement vertical.

En effet, le deuxième outil de travail 22 présente un angle de cône prédéterminé et de manière préférentielle, l'angle α entre l'axe de rotation 31a et la droite d'intersection 16a est égal à la moitié de l'angle de cône du deuxième outil de travail 22. Ainsi, le deuxième outil de travail 22 présente, lorsqu'il est monté sur le boîtier 10, une génératrice supérieure (celle en regard avec le deuxième conduit de guidage 32) parallèle au plan support 15. Le deuxième conduit de guidage 32 peut être agencé pour guider les aliments à travailler selon une direction perpendiculaire à une génératrice du deuxième outil de travail 22 tronconique située en regard du deuxième conduit de guidage 32. Ainsi, le deuxième conduit de guidage 32 sera perpendiculaire au plan support 15, ou autrement dit vertical, si le dispositif de préparation d'aliments repose sur un plan de travail horizontal. Une telle mise en oeuvre améliore notablement la stabilité du dispositif de préparation d'aliments lorsqu'un utilisateur pousse des aliments à travailler dans le deuxième conduit de guidage 32.

Enfin, le boîtier 10 comprend un bouton de commande 14 agencé pour mettre le moteur électrique en fonctionnement. Le bouton de commande 14 est agencé sur une face supérieure du boîtier 10. Pour des raisons de sécurité, on peut envisager d'utiliser un bouton de commande 14 à appui maintenu, pour forcer l'utilisateur à appuyer sur le bouton de commande 14 tant qu'il désire que l'outil de travail 20 tourne. Selon la mise en oeuvre représentée, la direction d'appui sur le bouton de commande 14 est verticale, ce qui améliore la stabilité d'utilisation. De plus, la direction d'appui présente un point d'intersection avec le plan support 15 situé dans l'empattement défini par la portion d'appui 19.

Le dispositif de préparation d'aliments peut comprendre un poussoir (non représenté sur les figures) agencé pour permettre à un utilisateur de pousser les aliments à travailler dans le deuxième conduit de guidage 32 vers le deuxième outil de travail 22 selon un axe de poussée. L'axe de poussée présente un point d'intersection avec le plan support 15 situé dans l'empattement, ce qui améliore également la stabilité d'utilisation.

La figure 2 représente une autre vue en perspective de l'appareil de préparation culinaire de la figure 1, avec le premier outil de travail 21 mis en place dans l'espace de travail. Le premier outil de travail 21 s'étend principalement du côté de l'orifice 12 traversant la paroi 11 du boîtier 10.

Tel que représenté sur la figure 2, le premier outil de travail 21 est conique avec une partie concave 21a s'étendant en direction de la bavette de déversement 13 à l'opposé de la pièce d'alimentation 30. Le premier outil de travail 21 comprend au moins une lame de coupe 21b agencée dans la partie concave 21a. La lame de coupe 21b est agencée pour couper en spirale des aliments lorsqu'ils sont introduits par le premier conduit de guidage 31 dans l'espace de travail et poussés dans la partie concave 21a du premier outil de travail 21, lorsque le premier outil de travail 21 est mis en place dans l'espace de travail. Le premier outil de travail 21 conique présente une base 26 formant la couronne périphérique 25.

Le premier conduit de guidage 31 est colinéaire avec l'axe de rotation 31a, alors que le deuxième conduit de guidage 32 est essentiellement perpendiculaire au premier conduit de guidage 31, mais tous deux sont agencés pour guider les aliments à travailler dans un même espace de travail où on installe soit le premier outil de travail 21 ou le deuxième outil de travail 22. Cette mise en oeuvre de la pièce d'alimentation 30 est simple et permet d'éviter d'avoir recours à un mécanisme articulé ou démontable d'un conduit d'alimentation qui devrait pouvoir occuper deux positions différentes. En d'autres termes, implanter dans la pièce d'alimentation 30 un premier et un deuxième conduit de guidage 31 et 32 supprime tous les mécanismes connus jusqu'alors, pour utiliser avec le même appareil de préparation culinaire des outils de travail coniques, ou tronconiques.

Ainsi le premier conduit de guidage 31 axial est agencé pour guider des aliments vers l'espace de travail selon une première direction le long de l'axe de rotation 31a, le premier outil de travail 21 est agencé pour travailler selon les aliments introduits dans le premier conduit de guidage 31, le deuxième conduit de guidage 32 non-axial est agencé pour guider des aliments vers l'espace de travail, et le deuxième outil de travail 22 est agencé pour travailler les aliments introduits dans le deuxième conduit de guidage 32. Le premier conduit de guidage 31 et le deuxième conduit de guidage 32 présentent des entrées distinctes. Le deuxième conduit de guidage 32 débouche dans une paroi latérale du premier conduit de guidage 31.

Plus particulièrement dans l'exemple de réalisation illustré sur les figures, le deuxième conduit de guidage 32 est agencé pour guider des aliments vers l'espace de travail selon une deuxième direction présentant au moins une composante normale à l'axe de rotation 31a. Le deuxième conduit de guidage 32 est distinct du premier conduit de guidage 31 mais débouche dans une paroi latérale du premier conduit de guidage 31.

Le dispositif de préparation d'aliments selon l'invention s'utilise et fonctionne de la manière suivante. L'utilisateur démonte la pièce d'alimentation 30 et met en place l'outil de travail 20 souhaité, puis remonte la pièce d'alimentation 30 sur le boîtier 10. Lorsque le premier outil de travail 21 est utilisé, l'utilisateur introduit les aliments à transformer dans le premier conduit de guidage 31 axial. Un tel outil de travail 20 ne nécessite pas un effort important d'appui sur les aliments. L'inclinaison de l'axe de rotation 31a permet de mieux doser l'effort exercé sur les aliments introduits dans le premier conduit de guidage 31. Lorsque le deuxième outil de travail 22 est utilisé, l'utilisateur introduit les aliments à transformer dans le deuxième conduit de guidage 32 non-axial. Un tel outil de travail 20 nécessite un effort d'appui plus important sur les aliments. L'inclinaison de l'axe de rotation 31a permet d'obtenir un effort d'appui sensiblement vertical, tout en utilisant un entraînement périphérique. Un effort plus important peut être exercé sur les aliments en vue de leur découpe, avec un dispositif de préparation d'aliment particulièrement stable.

Dans l'exemple de réalisation illustré sur les figures, la couronne périphérique 25 du deuxième outil de travail 22 tronconique est identique à la couronne périphérique 25 du premier outil de travail 21 conique. Les outils de travail 20 peuvent ainsi utiliser le même entraîneur.

A titre de variante, le premier outil de travail 21 et le deuxième outil de travail 22 pourraient être entrainés par des entraîneurs distincts.

A titre de variante, le premier outil de travail 21 n'est pas nécessairement conique. Le premier outil de travail 21 pourrait notamment être formé par une râpe plane ou incurvée.

A titre de variante, le deuxième outil de travail 22 n'est pas nécessairement tronconique. Le deuxième outil de travail 22 pourrait notamment être formé par un tambour cylindrique.

A titre de variante, le dispositif de préparation d'aliments peut comporter au moins un outil de travail 20. Le dispositif de préparation d'aliments peut comporter plusieurs outils de travail 20 amovibles comprenant au moins un premier outil de travail 21 et au moins un deuxième outil de travail 22. Le dispositif de préparation d'aliments ne comporte pas nécessairement un premier conduit de guidage 31 axial et un deuxième conduit de guidage 32 non-axial.

On comprendra que diverses modifications et/ou améliorations évidentes pour l'homme du métier peuvent être apportées aux différents modes de réalisation de l'invention décrits dans la présente description sans sortir du cadre de l'invention défini par les revendications annexées.

## Revendications

1. Dispositif de préparation d'aliments comprenant :
- un boîtier (10) présentant un dispositif d'entraînement,
- au moins un outil de travail (20) entraîné en rotation autour d'un axe de rotation (31a),
- le boîtier (10) présentant une portion d'appui (19) agencée pour définir un plan support (15) sur lequel le dispositif de préparation d'aliments peut reposer,
- l'axe de rotation (31a) formant un angle α avec une droite d'intersection (16a) du plan support (15) avec un autre plan (16) perpendiculaire au plan support (15) et comprenant l'axe de rotation (31a), l'angle α étant compris dans une gamme de valeurs allant de 0° à 20°,
- le boîtier (10) comprenant une interface (18) de fixation d'une pièce d'alimentation (30),
- la pièce d'alimentation (30) étant agencée pour être montée sur l'interface (18) de manière amovible,
**caractérisé :**
- **en ce que** l'outil de travail (20) comporte une couronne périphérique (25) agencée pour être entraînée par le dispositif d'entraînement autour de l'axe de rotation (31a),
- et **en ce que** l'interface (18) est agencée autour d'un orifice (12) ménagé dans une paroi (11) du boîtier (10) pour faire passer au travers de la paroi (11) les aliments introduits dans la pièce d'alimentation (30) et/ou transformés par l'outil de travail (20).

2. Dispositif de préparation d'aliments selon la revendication 1, **caractérisé en ce que** l'outil de travail (20) est agencé pour être pris en sandwich entre l'interface (18) et la pièce d'alimentation (30), lorsque la pièce d'alimentation (30) est montée sur l'interface (18).

3. Dispositif de préparation d'aliments selon l'une des revendications 1 ou 2, **caractérisé en ce qu'**il comprend une bavette de déversement (13) agencée en aval de l'orifice (12).

4. Dispositif de préparation d'aliments selon l'une des revendications 1 à 3, **caractérisé en ce que** la pièce d'alimentation (30) comprend un premier conduit de guidage (31) axial agencé pour guider des aliments vers l'outil de travail (20) selon une première direction le long de l'axe de rotation (31a).

5. Dispositif de préparation d'aliments selon la revendication 4, **caractérisé en ce que** le ou l'un des outils de travail (20) est conique et comprend au moins une lame de coupe (21b) agencée dans la partie concave (21a) pour couper en spirale des aliments lorsqu'ils sont introduits par le premier conduit de guidage (31) dans la partie concave (21a).

6. Dispositif de préparation d'aliments selon la revendication 5, **caractérisé en ce que** ledit outil de travail (20) conique présente une base (26) formant la couronne périphérique (25).

7. Dispositif de préparation d'aliments selon l'une des revendications 1 à 3, **caractérisé en ce que** la pièce d'alimentation (30) comprend un deuxième conduit de guidage (32) non-axial agencé pour guider des aliments vers l'outil de travail (20) selon une deuxième direction différente de l'axe de rotation (31a), et **en ce que** le ou l'un des outils de travail (20) est tronconique ou cylindrique et comprend au moins une portion de coupe (22a) agencée sur une génératrice d'un tronc de cône ou d'un cylindre, pour travailler des aliments lorsqu'ils sont introduits par le deuxième conduit de guidage (32).

8. Dispositif de préparation d'aliments selon la revendication 7, **caractérisé en ce que** le deuxième conduit de guidage (32) est agencé pour guider les aliments à travailler selon une direction perpendiculaire à une génératrice dudit outil de travail (20) tronconique ou cylindrique située en regard du deuxième conduit de guidage (32).

9. Dispositif de préparation d'aliments selon l'une des revendications 7 ou 8, **caractérisé en ce que** ledit outil de travail (20) est tronconique.

10. Dispositif de préparation d'aliments selon la revendication 9, **caractérisé en ce que** ledit outil de travail (20) tronconique présente un angle de cône dont la valeur est le double de la valeur de l'angle α.

11. Dispositif de préparation d'aliments selon l'une des revendications 9 ou 10, **caractérisé en ce que** ledit outil de travail (20) tronconique présente une première base (27) et une deuxième base (28) d'un diamètre supérieur à un diamètre de la première base (27), et **en ce que** la deuxième base (28) comprend la couronne périphérique (25).

12. Dispositif de préparation d'aliments selon l'une des revendications 7 à 11, **caractérisé en ce que** la portion d'appui (19) définit un empattement, et **en ce que** le dispositif de préparation d'aliments comprend un poussoir agencé pour permettre à un utilisateur de pousser les aliments à travailler dans le deuxième conduit de guidage (32) vers l'outil de travail (20) selon un axe de poussée, et **en ce que** l'axe de poussée présente un point d'intersection avec le plan support (15) situé dans l'empattement.

13. Dispositif de préparation d'aliments selon l'une des revendications 1 à 12, **caractérisé en ce que** le boîtier (10) loge un moteur électrique agencé pour entraîner en rotation l'outil de travail (20) mis en place dans l'espace de travail, par l'intermédiaire du dispositif d'entraînement.

14. Dispositif de préparation d'aliments selon les revendications 12 et 13, **caractérisé en ce que** le boîtier (10) comprend un bouton de commande (14) agencé pour mettre le moteur électrique en fonctionnement, **en ce que** le bouton de commande (14) est du type à appui maintenu selon une direction d'appui, et **en ce que** la direction d'appui présente un point d'intersection avec le plan support (15) situé dans l'empattement.

## Patentansprüche

1. Vorrichtung zur Zubereitung von Nahrungsmitteln, umfassend:
- ein Gehäuse (10), das eine Antriebsvorrichtung vorweist,
- mindestens ein Arbeitswerkzeug (20), das um eine Drehachse (31a) in Drehung versetzt wird,
- wobei das Gehäuse (10) einen Stützabschnitt (19) vorweist, der so angeordnet ist, dass er eine Auflageebene (15) definiert, auf der die Vorrichtung zur Zubereitung von Nahrungsmitteln aufliegen kann,
- wobei die Drehachse (31a) eine Winkel α mit einer Schnittlinie (16a) der Auflageebene (15) mit einer anderen Ebene (16) senkrecht zu der Auflageebene (15) bildet und die Drehachse (31a) umfasst, wobei der Winkel α in einem Wertebereich von 0° bis 20° liegt,
- wobei das Gehäuse (10) eine Verbindungsstelle (18) zur Befestigung des Zuführteils (30) umfasst,
- wobei das Zuführteil (30) angeordnet ist, um an der Verbindungsstelle (18) entfernbar angebracht zu werden,
**dadurch gekennzeichnet:**
- **dass** das Arbeitswerkzeug (20) einen Umfangsring (25) aufweist, der angeordnet ist, um von der Antriebsvorrichtung um die Drehachse (31a) angetrieben zu werden,
- und **dass** die Verbindungsstelle (18) um eine Öffnung (12) herum angeordnet ist, die in einer Wand (11) des Gehäuses (10) ausgebildet ist, um durch die Wand (11) die Lebensmittel passieren zu lassen, die in das Zuführteil (30) eingebracht und / oder von dem Arbeitsgerät (20) verarbeitet werden.

2. Vorrichtung zur Zubereitung von Nahrungsmitteln nach Anspruch 1, **dadurch gekennzeichnet, dass** das Arbeitswerkzeug (20) angeordnet ist, um zwischen der Verbindungsstelle (18) und dem Zuführteil (30) sandwichartig aufgenommen zu werden, wenn das Zuführteil (30) an der Verbindungsstelle (18) angebracht ist.

3. Vorrichtung zur Zubereitung von Nahrungsmitteln nach einem der Ansprüche 1 oder 2, **dadurch gekennzeichnet, dass** sie eine der Öffnung (12) nachgeordnete Austrittsklappe (13) aufweist.

4. Vorrichtung zur Zubereitung von Nahrungsmitteln nach einem der Ansprüche 1 bis 3, **dadurch gekennzeichnet, dass** das Zuführteil (30) einen ersten axialen Führungskanal (31) umfasst, der angeordnet ist, um Nahrungsmittel zu dem Arbeitsgerät (20) in einer ersten Richtung entlang der Drehachse (31a) zu führen.

5. Vorrichtung zur Zubereitung von Nahrungsmitteln nach Anspruch 4, **dadurch gekennzeichnet, dass** das eine oder eines der Arbeitswerkzeuge (20) konisch ist und mindestens ein in dem konkaven Teil (21a) angeordnetes Schneidmesser (21b) umfasst, um Nahrungsmittel spiralförmig zu schneiden, wenn sie durch den ersten Führungskanal (31) in den konkaven Teil (21a) eingeführt werden.

6. Vorrichtung zur Zubereitung von Nahrungsmitteln nach Anspruch 5, **dadurch gekennzeichnet, dass** das konische Arbeitswerkzeug (20) eine Basis (26) aufweist, die den Umfangsring (25) bildet.

7. Vorrichtung zur Zubereitung von Nahrungsmitteln nach einem der Ansprüche 1 bis 3, **dadurch gekennzeichnet, dass** das Zuführteil (30) einen zweiten nicht axialen Führungskanal (32) umfasst, der angeordnet ist, um Lebensmittel zu dem Arbeitswerkzeug (20) in einer zweiten Richtung zu führen, die sich von der Drehachse (31a) unterscheidet, und dass das oder eines der Arbeitswerkzeuge (20) kegelstumpfförmig oder zylindrisch ist und mindestens einen Schneidabschnitt (22a) umfasst, der an einer Mantellinie eines Kegelstumpfes oder eines Zylinders angeordnet ist, um Lebensmittel zu verarbeiten, wenn sie durch den zweiten Führungskanal (32) eingeführt werden.

8. Vorrichtung zur Zubereitung von Nahrungsmitteln nach Anspruch 7, **dadurch gekennzeichnet, dass** der zweite Führungskanal (32) angeordnet ist, um die zu verarbeitenden Nahrungsmittel in einer Richtung senkrecht zu einer Mantellinie des kegelstumpfförmigen oder zylindrischen Arbeitungswerkzeugs (20) zu führen, die sich gegenüber dem zweiten Führungskanal (32) befindet.

9. Vorrichtung zur Zubereitung von Nahrungsmitteln nach einem der Ansprüche 7 oder 8, **dadurch gekennzeichnet, dass** das Arbeitswerkzeug (20) kegelstumpfförmig ist.

10. Vorrichtung zur Zubereitung von Nahrungsmitteln nach Anspruch 9, **dadurch gekennzeichnet, dass** das kegelstumpfförmige Arbeitswerkzeug (20) einen Kegelwinkel aufweist, dessen Wert das Doppelte des Werts des Winkels α beträgt.

11. Vorrichtung zur Zubereitung von Nahrungsmitteln nach einem der Ansprüche 9 oder 10, **dadurch gekennzeichnet, dass** das kegelstumpfförmige Arbeitswerkzeug (20) eine erste Basis (27) und eine zweite Basis (28) mit einem Durchmesser vorweist, der größer als ein Durchmesser der ersten Basis (27) ist, und dass die zweite Basis (28) den Umfangsring (25) umfasst.

12. Vorrichtung zur Zubereitung von Nahrungsmitteln nach einem der Ansprüche 7 bis 11, **dadurch gekennzeichnet, dass** der Stützabschnitt (19) einen Achsabstand definiert, und dass die Vorrichtung zur Zubereitung von Nahrungsmitteln einen Schieber umfasst, der angeordnet ist, um es einem Benutzer zu ermöglichen, Nahrungsmittel zur Verarbeitung in den zweiten Führungskanal (32) zu dem Arbeitswerkzeug (20) entlang einer Schubachse zu schieben, und dass die Schubachse einen Schnittpunkt mit der Auflageebene (15) vorweist, der sich im Achsabstand befindet.

13. Vorrichtung zur Zubereitung von Nahrungsmitteln nach einem der Ansprüche 1 bis 12, **dadurch gekennzeichnet, dass** in dem Gehäuse (10) ein Elektromotor aufgenommen ist, um das in dem Arbeitsraum angeordnete Arbeitswerkzeug (20) mittels einer Antriebsvorrichtung zu drehen.

14. Vorrichtung zur Zubereitung von Nahrungsmitteln nach den Ansprüchen 12 und 13, **dadurch gekennzeichnet, dass** das Gehäuse (10) einen zum Einschalten des Elektromotors angeordneten Bedienknopf (14) umfasst, dass der Bedienknopf (14) vom Typ zum Gedrückthalten in der Drückrichtung ist, und dass die Drückrichtung einen Schnittpunkt mit der Auflagerebene (15) aufweist, der sich im Achsabstand befindet.

## Claims

1. Device for preparing food comprising:
- a case (10) having a driving device,
- at least one work tool (20) driven in rotation about an axis of rotation (31a),
- the case (10) having a support portion (19) arranged to define a support surface (15) whereon the device for preparing food can rest,
- the axis of rotation (31a) forming an angle α with an intersection line (16a) of the support surface (15) with another plane (16) perpendicular to the support surface (15) and comprising the axis of rotation (31a), with the angle α within a range of values from 0° to 20°,
- the case (10) comprising an interface (18) for fastening a feeding part (30),
- the feeding part (30) being arranged to be mounted on the interface (18) in a removable manner,
**characterised:**
- **in that** the work tool (20) comprises a peripheral ring (25) arranged to be driven by the driving device about the axis of rotation (31a),
- and **in that** the interface (18) is arranged around an orifice (12) arranged in a wall (11) of the case (10) in order to pass through the wall (11) the food introduced into the feeding part (30) and/or transformed by the work tool (20).

2. Device for preparing food according to claim 1, **characterised in that** the work tool (20) is arranged to be sandwiched between the interface (18) and the feeding part (30), when the feeding part (30) is mounted on the interface (18).

3. Device for preparing food according to one of claims 1 or 2, **characterised in that** it comprises a discharge flap (13) arranged downstream of the orifice (12).

4. Device for preparing food according to one of claims 1 to 3, **characterised in that** the feeding part (30) comprises a first axial guide duct (31) arranged to guide food to the work tool (20) according to a first direction along the axis of rotation (31a).

5. Device for preparing food according to claim 4, **characterised in that** the work tool or one of the work tools (20) is tapered and comprises at least one cutting blade (21b) arranged in the concave portion (21a) in order to cut as a spiral food when they are introduced by the first guide duct (31) into the concave portion (21a).

6. Device for preparing food according to claim 5, **characterised in that** said tapered work tool (20) has a base (26) forming the peripheral ring (25).

7. Device for preparing food according to one of claims 1 to 3, **characterised in that** the feeding part (30) comprises a second non-axial guide duct (32) arranged to guide the food to the work tool (20) according to a second direction different from the axis of rotation (31a), and **in that** the work tool or one of the work tools (20) is truncated or cylindrical and comprises at least one cutting portion (22a) arranged on a generatrix of a truncated cone or of a cylinder, in order to work on the food when it is introduced by the second guide duct (32).

8. Device for preparing food according to claim 7, **characterised in that** the second guide duct (32) is arranged to guide the food to be worked on along a direction perpendicular to a generatrix of said truncated or cylindrical work tool (20) located facing the second guide duct (32).

9. Device for preparing food according to one of claims 7 or 8, **characterised in that** said work tool (20) is truncated.

10. Device for preparing food according to claim 9, **characterised in that** said truncated work tool (20) has a cone angle of which the value is double the value of the angle α.

11. Device for preparing food according to one of claims 9 or 10, **characterised in that** said truncated work tool (20) has a first base (27) and a second base (28) with a diameter greater than a diameter of the first base (27), and **in that** the second base (28) comprises the peripheral ring (25).

12. Device for preparing food according to one of claims 7 to 11, **characterised in that** the support portion (19) defines a wheelbase, and **in that** the device for preparing food comprises a pusher arranged to allow a user to push the food to be worked on in the second guide duct (32) to the work tool (20) along a thrust axis, and **in that** the thrust axis has an intersection point with the support surface (15) located in the wheelbase.

13. Device for preparing food according to one of claims 1 to 12, **characterised in that** the case (10) houses an electric motor arranged to drive in rotation the work tool (20) set in place in the work space, by the intermediary of the driving device.

14. Device for preparing food according to claims 12 and 13, **characterised in that** the case (10) comprises a control button (14) arranged to put the electric motor in operation, **in that** the control button (14) is of the maintained support type according to a support direction, and **in that** the support direction has an intersection point with the support surface (15) located in the wheelbase.
